# FASCICULE DE BREVET EUROPEEN

(11) **EP 0 486 339 B1**
(45) Date de publication et mention de la délivrance du brevet: **08.03.1995**
(21) Numéro de dépôt: 91402802.2
(22) Date de dépôt: 22.10.1991
(51) Int. Cl.: B60T 11/16

(54) **Dispositif d'actionnement d'un maître cylindre**
Einrichtung zum Betätigen eines Hauptbremszylinders
Device for actuating a master cylinder

(30) Priorité: 13.11.1990 FR 9014063
(43) Date de publication de la demande: 20.05.1992
(73) Titulaire: ALLIEDSIGNAL EUROPE SERVICES TECHNIQUES, 93700 Drancy (FR)
(72) Inventeur: Gautier, Jean-Pierre, Bendix Europe Services Tech., F-93700 Drancy (FR); Verbo, Ulysse, Bendix Europe Services Techniques, F-93700 Drancy (FR); Perez, Miguel, Bendix Europe Services Techniques, F-93700 Drancy (FR)
(74) Mandataire: Bentz, Jean-Paul

(56) Documents cités:
- US-A- 2 124 762
- US-A- 3 010 772

## Description

La présente invention a pour objet un dispositif d'actionnement d'un maître-cylindre, en particulier destiné à équiper un circuit de freinage d'un véhicule automobile.

On sait que de tels maîtres-cylindres comprennent au moins un piston dont l'actionnement engendre une augmentation de la pression d'un fluide hydraulique dans au moins une chambre de travail, cette augmentation de pression étant transmise par des canalisations à des moteurs de frein pour immobiliser les roues du véhicule ainsi équipé. L'actionnement du piston du maître-cylindre a lieu, de façon connue, soit par une tige reliée directement à la pédale de frein, soit par la tige de poussée d'un servomoteur pneumatique d'assistance au freinage lui-même pouvant être actionné par la pédale de frein.

Il peut arriver que, dans certaines situations, bien que de nombreuses précautions soient prises, la tige d'actionnement du piston du maître-cylindre perde le contact avec ce dernier. Ces cas peuvent se présenter par exemple lorsque différents ressorts de rappel en position de repos sont fatigués, lorsque les tolérances de fabrication s'additionnent et introduisent des jeux importants, ou lorsque des vibrations apparaissent dans le circuit de freinage. Cette dernière éventualité peut par exemple avoir pour origine l'interposition dans le circuit de freinage d'un dispositif d'anti-blocage des roues, qui, pendant ses périodes de fonctionnement, module à cadence élevée la pression dans le circuit de freinage. Il s'ensuit alors des vibrations à l'interface entre le piston du maître-cylindre et la tige d'actionnement, vibrations génératrices de bruit et susceptibles d'engendrer la rotation de la tige d'actionnement, la perte des réglages effectués sur celle-ci et l'usure prématurée des pièces.

L'invention a donc pour objet un dispositif d'actionnement d'un maître-cylindre pour circuit de freinage d'un véhicule automobile, qui assure le centrage de la tige d'actionnement par rapport au piston du maître-cylindre, qui empêche leur rotation relative, qui évite les vibrations et les bruits entre ces deux pièces, et qui limite leur usure.

Le document US-A-3 010 772, correspondant au préambule de la revendication principale, décrit l'utilisation d'un moyen élastique de verrouillage interdisant un mouvement relatif axial de la tige d'actionnement par rapport au piston du maître-cylindre. Toutefois ce moyen de verrouillage n'assure pas un maintien radial de la tige par rapport au piston.

Dans ce but, l'invention propose un dispositif d'actionnement d'un maître-cylindre constitué d'une tige d'actionnement agissant sur un piston d'un maître-cylindre.

Selon une caractéristique de l'invention, des moyens élastiques sont comprimés entre la tige d'actionnement et le logement du piston du maître-cylindre et réalisent le maintien radial et le centrage de la tige d'actionnement dans le logement.

L'invention sera mieux comprise et d'autres buts, avantages et caractéristiques de celle-ci apparaîtront plus clairement à la lecture de la description qui suit d'un mode de réalisation donné à titre d'exemple non limitatif en référence au dessin annexé sur lequel :
- La Figure 1 représente en demi-coupe un dispositif d'actionnement d'un maître-cylindre réalisé conformément à la présente invention,
- La Figure 2 est une vue en perspective d'un mode de réalisation d'une bague mettant en oeuvre la présente invention,
- La Figure 3 est une vue en perspective d'une variante du mode de réalisation de la Figure 2,
- La Figure 4 est une vue en perspective d'une autre variante du mode de réalisation de la Figure 2.

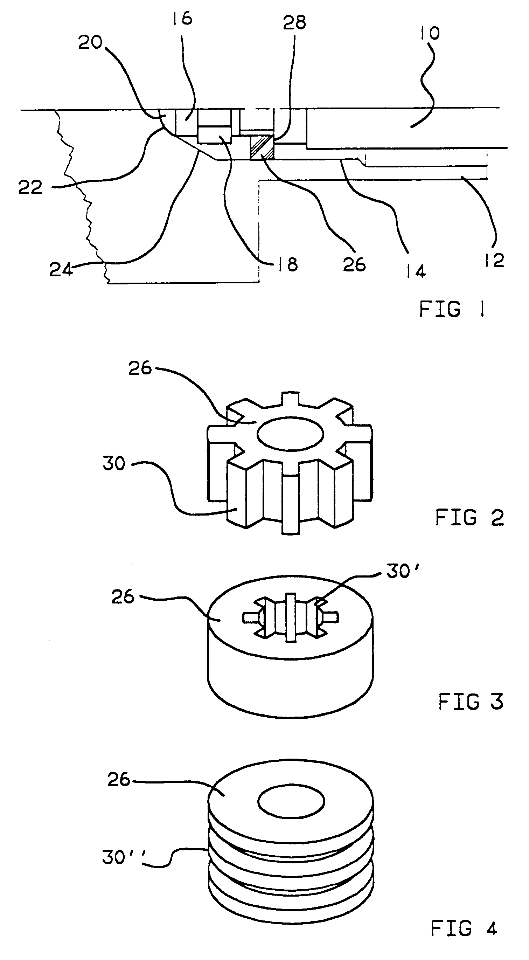

On voit sur la Figure 1 un dispositif d'actionnement d'un maître-cylindre, constitué d'une tige d'actionnement 10 coopérant avec le piston 12 du maître-cylindre (non représenté) en pénétrant dans un logement 14 ménagé dans le piston 12 dans sa partie tournée vers l'extérieur du maître-cylindre.

La tige d'actionnement 10 est pourvue à son extrémité coopérant avec le piston 12 d'une vis 16 dont une partie de l'extrémité présente des moyens 18 d'entraînement en rotation, par exemple une forme d'écrou à six pans. La vis 16 sert, de façon connue, à ajuster la longueur de la tige 10 à la valeur désirée, le contre-écrou 18 l'immobilisant dans la position voulue. La vis 16 est pourvue d'une tête en forme de calotte sphérique 20, le fond du logement 14 présentant une forme de cuvette sphérique 22 de même rayon de courbure, les bords de cette cuvette sphérique étant reliés aux parois du logement 14 par une portion de paroi 24 de forme tronconique.

On voit donc bien que, soit par une perte de raideur d'un des ressorts de rappel (non représentés) du système d'actionnement, soit par l'intermédiaire de tolérances de fabrication, la calotte 20 peut perdre le contact avec la cuvette 22. Il s'ensuit alors une course à vide ou course morte du dispositif exagérée. De plus, si le système de freinage est équipé d'un dispositif d'anti-blocage des roues ou d'anti-patinage à l'accélération, le fonctionnement de tels dispositifs peut induire des vibrations dans le circuit de freinage qui peuvent être répercutées sur le piston 12 du maître-cylindre.

Lors de ces vibrations du piston 12, la calotte 20 sera également amenée périodiquement à perdre le contact avec la cuvette 22. La calotte 20 s'engagera alors périodiquement sur la portion de paroi 24. Il s'ensuit donc, comme mentionné plus haut, des bruits indésirables, une usure prématurée de la calotte 20, de la cuvette 22 et de la portion de paroi 24, un décentrage de la tige 10 dans le logement 14 et un desserrage de la vis 16.

Ces inconvénients sont évités grâce à l'invention qui prévoit de disposer des moyens élastiques de centrage 26 entre la tige d'actionnement 10 et le piston 12 entre lesquels ils sont comprimés. Ces moyens élastiques sont, dans l'exemple représenté, constitués d'une bague élastique 26 disposée entre la paroi du logement 14 et la tige 10. Ainsi qu'on le comprendra aisément, la bague 26, réalisée en matériau résilient, comme par exemple du caoutchouc, assure le maintien, tant axial que radial, de la tige 10 par rapport au piston 12. Le maintien radial de la tige 10 par rapport au piston 12 est obtenu par la compression radiale de la bague 26, le maintien axial de ces deux pièces pouvant avantageusement être amélioré en prévoyant par exemple un épaulement 28 sur la tige 10 servant d'appui à la bague 26. Un épaulement d'appui peut également être prévu dans la paroi du logement 14. On peut également prévoir deux épaulements sur la tige 10 de façon à former une gorge dans cette tige pour recevoir la bague 26. De façon alternative ou additionnelle, deux épaulements délimitant une gorge peuvent être formés dans la paroi du logement 14 pour recevoir la bague 26.

Bien que toute forme de bague puisse a priori convenir, par exemple, une bague torique, il a été trouvé qu'une bague dont la coupe axiale, c'est-à-dire selon un plan contenant l'axe de celle-ci, présente une section polygonale donnait les meilleurs résultats, en particulier une section rectangulaire, et encore plus avantageusement une section carrée telle que représentée sur la Figure 1.

De façon à accroître l'élasticité de la bague 26 et pour faciliter son montage à la fois sur la tige 10 et dans le logement 14, on pourra avantageusement prévoir de la former avec des cannelures 30 sur sa surface extérieure comme sur la Figure 2 et/ou 30′ sur sa surface intérieure comme sur la Figure 3. Ces cannelures peuvent être axiales comme représenté sur les Figures 2 et 3, ou 30˝ contenues dans un plan perpendiculaire à l'axe de la bague 26, c'est-à-dire continues le long de la circonférence extérieure ou intérieure de la bague 26, comme représenté sur la Figure 4.

## Revendications

1. Dispositif d'actionnement d'un maître-cylindre constitué d'une tige d'actionnement (10) pénétrant dans un logement (14) ménagé dans un piston (12) du maître-cylindre, des moyens élastiques constitués par une bague (25) un matériau résilient (26) étant prévus entre la tige d'actionnement (10) et l'intérieur du logement (14) du piston (12) du maître-cylindre, caractérisé en ce que les moyens élastiques (26) sont comprimés entre la tige d'actionnement (10) et le logement (14) et réalisent le maintien radial et le centrage de la tige d'actionnement (10) dans le logement (14).

2. Dispositif selon la revendication 1, caractérisé en ce que le matériau résilient est du caoutchouc.

3. Dispositif selon la revendication 1, caractérisé en ce que la bague (26) en matériau résilient présente en coupe axiale une section polygonale.

4. Dispositif selon la revendication 3, caractérisé en ce que la bague (26) en matériau résilient présente en coupe axiale une section carrée.

5. Dispositif selon la revendication 3 ou la revendication 6, caractérisé en ce que la bague (26) en matériau résilient prend appui sur au moins un épaulement (28) formé sur la tige (10) et/ou la paroi du logement (14).

6. Dispositif selon la revendication 4, caractérisé en ce qu'au moins une des surfaces intérieure ou extérieure de la bague (26) présente des cannelures (30, 30') dans le sens axial.

7. Dispositif selon la revendication 4, caractérisé en ce qu'au moins une des surfaces intérieure ou extérieure de la bague (26) présente des cannelures (30'') contenues dans un plan perpendiculaire à l'axe du cylindre creux.

8. Dispositif selon l'une quelconque des revendications précédentes, caractérisé en ce que la tige d'actionnement (10) du maître-cylindre est une tige de poussée d'un servomoteur pneumatique d'assistance au freinage.

## Claims

1. Device for actuating a master cylinder constituting by an actuating rod (10) penetrates into a housing (14) provided in piston (12) of the master cylinder, elastic means constituted by a ring (25) a [sic] resilient material (26) being provided between the actuating rod (10) and the interior of the housing (14) of the piston (12) of the master cylinder, characterized in that the elastic means (26) are compressed between the actuating rod (10) and the housing (14) and effect the radial retention and the centring of the actuating rod (10) in the housing (14).

2. Device according to Claim 1, characterized in that the resilient material is rubber.

3. Device according to Claim 1, characterized in that the ring (26) of resilient material presents a polygonal axial cross-section.

4. Device according to Claim 3, characterized in that the ring (26) of resilient material presents a square axial cross-section.

5. Device according to Claim 3 or Claim 6 [sic], characterized in that the ring (26) of resilient material bears on at least one shoulder (28) formed on the rod (10) and/or the wall of the housing (14).

6. Device according to Claim 4, characterized in that at least one of the interior or exterior surfaces of the ring (26) possesses splines (30, 30') in the axial direction.

7. Device according to Claim 4, characterized in that at least one of the interior or exterior surfaces of the ring (26) possesses splines (30'') contained in a plane perpendicular to the axis of the hollow cylinder.

8. Device according to any of the preceding claims, characterized in that the actuating rod (10) of the master cylinder is a pushrod of a pneumatic brake booster.

## Patentansprüche

1. Vorrichtung zum Betätigen eines Hauptzylinders, mit einer Betätigungsstange (10), die in eine in einem Kolben (12) des Hauptzylinders ausgebildete Aufnahme (14) eindringt, sowie einem Federmittel, das durch einen Ring (25) aus einem elastischen Material (26) gebildet ist, der zwischen der Betätigungsstange (10) und dem Inneren der Aufnahme (14) des Kolbens (12) des Hauptzylinders vorgesehen ist, dadurch gekennzeichnet, daß das Federmittel (26) zwischen der Betätigungsstange (10) und der Aufnahme (14) zusammengedrückt wird und den radialen Halt und die Zentrierung der Betätigungsstange (10) in der Aufnahme (14) bewirkt.

2. Vorrichtung nach Anspruch 1, dadurch gekennzeichnet, daß das elastische Material Kautschuk ist.

3. Vorrichtung nach Anspruch 1, dadurch gekennzeichnet, daß der Ring (26) aus elastischem Material im Axialschnitt einen polygonalen Querschnitt aufweist.

4. Vorrichtung nach Anspruch 3, dadurch gekennzeichnet, daß der Ring (26) aus elastischem Material im Axialschnitt einen viereckigen Querschnitt aufweist.

5. Vorrichtung nach Anspruch 3 oder Anspruch 6, dadurch gekennzeichnet, daß der Ring (26) aus elastischem Material sich wenigstens an einer Schulter (28) abstützt, die auf der Stange (10) und/oder der Wand der Aufnahme (14) gebildet ist.

6. Vorrichtung nach Anspruch 4, dadurch gekennzeichnet, daß wenigstens die Innenfläche oder die Außenfläche des Ringes (26) Rillen (30, 30') in Axialrichtung aufweist.

7. Vorrichtung nach Anspruch 4, dadurch gekennzeichnet, daß wenigstens die Innenfläche oder die Außenfläche des Ringes (26) Rillen (30'') aufweist, die in einer zur Achse des Hohlzylinders senkrechten Ebene verlaufen.

8. Vorrichtung nach einem der vorangehenden Ansprüche, dadurch gekennzeichnet, daß die Betätigungsstange (10) des Hauptzylinders eine Schubstange eines pneumatischen Bremsunterstützungs-Servomotors ist.
